# FASCICULE DE BREVET EUROPEEN

(11) **EP 4 010 563 B1**
(45) Date de publication et mention de la délivrance du brevet: **19.04.2023**
(21) Numéro de dépôt: 20750280.8
(22) Date de dépôt: 06.08.2020
(51) Int. Cl.: F01D 11/24, F01D 25/28

(54) **DISPOSITIF DE REFROIDISSEMENT PAR JETS D'AIR D'UN CARTER EXTERNE DE TURBOMACHINE ET TURBOMACHINE ÉQUIPÉE D'UN TEL DISPOSITIF**
PRALLKÜHLVORRICHTUNG FÜR EIN TURBOMASCHINEN-AUSSENGEHÄUSE UND TURBOMASCHINE MIT ENTSPRECHENDER VORRICHTUNG
IMPINGEMENT COOLING DEVICE FOR A TURBOMACHINE EXTERNAL CASING AND TURBOMACHINE EQUIPPED WITH SUCH DEVICE

(30) Priorité: 09.08.2019 FR 1909093
(43) Date de publication de la demande: 15.06.2022
(73) Titulaire: SAFRAN AIRCRAFT ENGINES, 75015 Paris (FR)
(72) Inventeur: MORLIERE, Simon Nicolas, 77550 MOISSY-CRAMAYEL (FR); BLANCHARD, Stéphane Pierre Guillaume, 77550 MOISSY-CRAMAYEL (FR); BEAUQUIN, Nicolas Jean-Marc Marcel, 77550 MOISSY-CRAMAYEL (FR)
(74) Mandataire: Regimbeau
(86) Numéro de dépôt international: PCT/EP2020/072114
(87) Numéro de publication internationale: WO 2021/028307

(56) Documents cités:
- WO-A1-2015/065525
- WO-A1-2019/081861
- JP-A- 2003 172 152
- JP-U- S52 129 805
- US-A- 5 435 124
- US-A- 5 451 116
- US-A1- 2013 318 979
- US-A1- 2014 030 066
- US-A1- 2016 215 698

## Description

### DOMAINE DE L'INVENTION

L'invention se situe dans le domaine des turbomachines d'aéronefs.

La présente invention concerne un dispositif de refroidissement par jets d'air d'un carter externe d'une turbomachine, comprenant un boîtier d'alimentation en air et un dispositif d'accrochage de ce boitier, sur ce même carter.

L'invention concerne également une turbomachine comprenant un dispositif de refroidissement par jets d'air tel que précité.

### ETAT DE LA TECHNIQUE

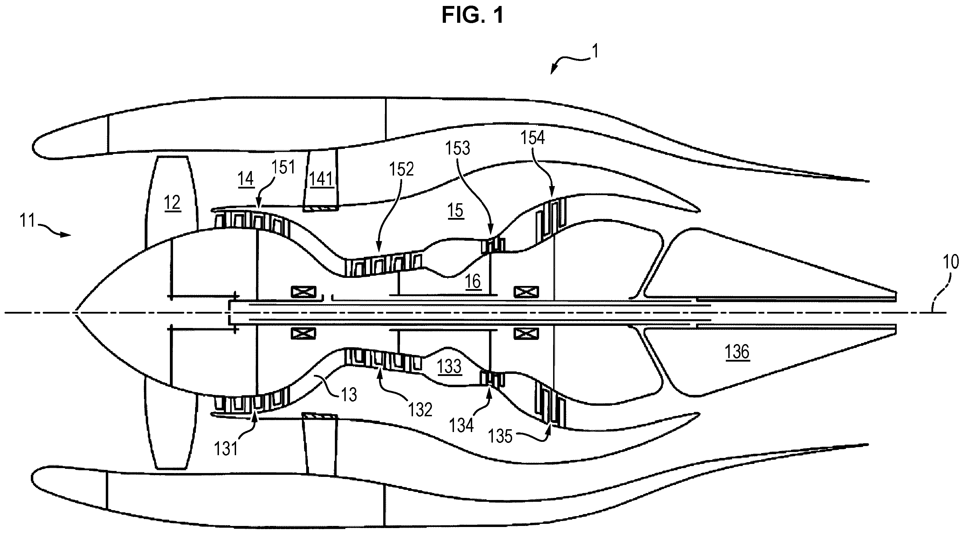

Un exemple d'une turbomachine à double flux, destinée à être installée sur un aéronef (non représenté) pour le propulser dans les airs, est représenté sur la figure 1 jointe.

De manière classique, cette turbomachine 1 s'étend selon un axe principal 10 et comprend une manche d'air 11 par laquelle un flux de gaz pénètre dans la turbomachine 1 et dans laquelle le flux de gaz traverse une soufflante 12. En aval de la soufflante 12, le flux de gaz se sépare en un flux de gaz primaire s'écoulant dans une veine primaire 13 et un flux de gaz secondaire s'écoulant dans une veine secondaire 14.

Dans la veine primaire 13, le flux primaire traverse, d'amont en aval (c'est-à-dire de la gauche vers la droite de la figure), un compresseur basse pression 131, un compresseur haute pression 132, une chambre de combustion 133, une turbine haute pression 134, une turbine basse pression 135, et un carter d'échappement des gaz auquel est reliée une tuyère d'échappement 136. Dans la veine secondaire 14, le flux secondaire traverse un redresseur de soufflante 141, puis vient se mélanger au flux primaire au niveau de la tuyère d'échappement.

Un carter inter-veine 15 sépare la veine primaire 13 de la veine secondaire 14.

Chaque compresseur ou turbine de la turbomachine comprend plusieurs étages, chaque étage étant formé par un aubage fixe (ou stator) ou encore redresseur, et un aubage tournant (ou rotor) qui tourne autour de l'axe principal 10 de la turbomachine.

Le stator et le rotor d'un étage comprennent chacun une pluralité d'aubes réparties de manière régulière autour de l'axe principal 10 de la turbomachine et s'étendant radialement par rapport à cet axe, à l'intérieur de la veine primaire de sorte à être traversées par le flux primaire.

L'ensemble des étages d'un compresseur ou d'une turbine est logé entre un carter interne 16 s'étendant autour de l'axe principal 10 et le carter inter-veine 15, ce dernier étant ménagé de manière coaxiale autour du carter interne 16 de façon à délimiter la veine primaire 13.

Le carter inter-veine 15 comprend de l'amont vers l'aval, un carter externe 151 de compresseur basse pression, un carter externe 152 de compresseur haute pression, un carter externe 153 de turbine haute pression et un carter externe 154 de turbine basse pression.

Les jeux radiaux entre le sommet des aubes d'un rotor et le carter externe qui l'entoure sont gérés par un dispositif de refroidissement par jets d'air de ce carter.

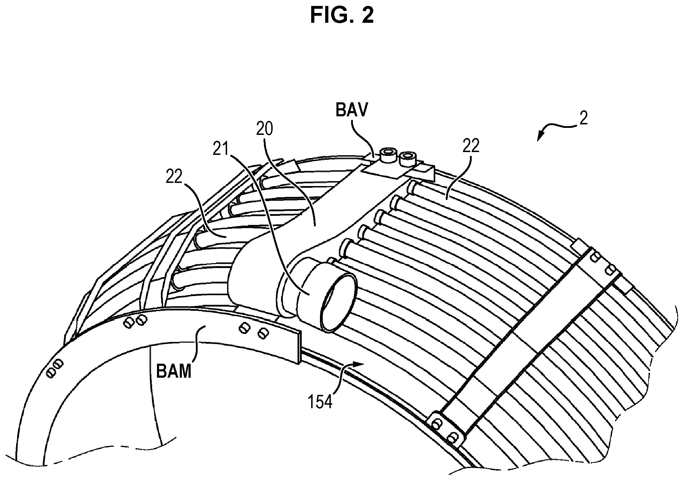

On peut ainsi voir sur la figure 2 jointe, une partie d'un carter externe 154 de turbine basse pression, équipé d'un dispositif de refroidissement par jets d'air 2. Ce dispositif 2 comprend au moins un boîtier 20 d'alimentation en air sous pression, raccordé à une source d'air (par exemple une partie du flux d'air secondaire) par un raccord 21. Chaque boîtier 20 est également raccordé à plusieurs tubes de refroidissement 22 (ici par exemple au nombre de sept de chaque côté du boîtier 20). Chaque tube 22 est incurvé et disposé autour du carter externe 154. En outre, chaque tube 22 est percé d'une série d'orifices d'éjection d'air (non visibles sur les figures) débouchant au droit de la face externe du carter externe 154.

Le dispositif de refroidissement 2 peut être du type connu sous l'acronyme "LPTCC" (de l'anglais "*Low Pressure Turbine Clearance Control*", qui signifie « contrôle des jeux pour turbine basse pression) » ou encore du type connu sous l'acronyme "LPTACC"(de l'anglais "*Low Pressure Turbine Active Clearance Control*", qui signifie contrôle des jeux actif pour turbine basse pression).

Dans le cas d'un dispositif de refroidissement du type LPTCC, le débit d'air circulant dans le dispositif 2 est directement proportionnel au débit d'air (flux secondaire) circulant dans la veine secondaire.

Dans le cas d'un dispositif de refroidissement du type LPTACC, le débit d'air circulant dans le dispositif 2 est contrôlé via une vanne motorisée (non visible sur les figures), reliée au calculateur de l'aéronef, qui adapte ce débit d'air en fonction des phases du vol (décollage, ascension, croisière, etc...)

Dans les dispositifs de refroidissement de l'état de la technique, le boîtier 20 est fixé à ses deux extrémités amont et aval respectivement à une bride amont BAM et à une bride aval BAV, ces deux brides étant elles-mêmes fixées aux deux extrémités du carter externe 154.

Or, pour qu'un refroidissement par impact de jets d'air soit efficace, il faut que l'entrefer entre les tubes 22 et la face extérieure du carter externe 154 soit constant et de faible valeur. Les tubes 22 étant eux-mêmes fixés sur le boîtier 20, il s'en suit que l'entrefer entre ce boîtier 20 et le carter externe 154 doit également être constant et de faible valeur.

Or, pendant le fonctionnement de la turbomachine et notamment au décollage de l'aéronef, on constate qu'il existe un gradient thermique important entre les brides amont et aval que l'on considère comme "froides" et la surface externe (dénommée « peau ») du carter externe 154 que l'on considère comme "chaude". Ainsi, les brides se dilatent radialement moins que le reste du carter 154 et ce dernier prend facilement la forme d'un tonneau. En conséquence l'entrefer entre le centre du boîtier 20 et le carter 154 ne varie pas de la même façon que l'entrefer entre les extrémités amont ou aval du boîtier 20 et le carter 154.

De plus, l'accroche du boîtier 20 sur les brides BAM et BAV impose une chaîne de cotes relativement importante du dispositif de refroidissement 2, qui se traduit par une augmentation considérable (de l'ordre de plusieurs millimètres) de la valeur nominale de l'entrefer entre le boîtier 20 et la surface externe du carter 154 pour éviter tout risque de contact entre eux.

On connaît déjà d'après le document WO 2015/65 525, un dispositif de fixation d'un réservoir d'huile sur le carter externe du fan d'une turbomachine. Ce dispositif comprend une liaison à rotule. Toutefois, ce document ne décrit pas le dispositif de fixation de l'invention.

On connaît également d'après les documents US 5 435 124, JPS 52 129 805, US 2016/215 698 et US 5 451 116 des supports pour monter un accessoire sur un moteur d'avion mais qui sont différents de l'invention.

On connaît enfin d'après les documents JP 2000 172 152, WO 2019/081861 et US 2014/030066, un dispositif de refroidissement par jets d'air correspondant au préambule de la revendication 1.

### EXPOSE DE L'INVENTION

L'invention a donc pour but de proposer un dispositif d'accrochage d'un boîtier d'alimentation en air, tel que précité, sur le carter externe d'une turbine (haute ou basse pression) ou d'un compresseur (haute ou basse pression) d'une turbomachine, qui évite les inconvénients précités de l'état de la technique. Un tel dispositif d'accrochage a notamment pour objectif de maintenir un entrefer relativement constant entre le boîtier et le carter pendant la phase de vol de l'aéronef et d'éviter le contact entre le boîtier et le carter pendant les phases transitoires, telles que le décollage de l'aéronef pendant lesquelles le carter se dilate davantage.

A cet effet, l'invention concerne un dispositif de refroidissement par jets d'air d'un carter externe de turbomachine, ce dispositif de refroidissement comprenant un boîtier d'alimentation en air, configuré pour alimenter en air des tubes de refroidissement de ce carter, ledit boîtier comprenant une extrémité amont et une extrémité aval, l'amont et l'aval étant définis par rapport au sens d'écoulement du flux dans ladite turbomachine, ledit boîtier comprenant un dispositif d'accrochage configuré pour être accroché sur ledit carter externe.

Conformément à l'invention, ce dispositif d'accrochage comprend deux dispositifs de maintien par liaison à rotule, dits "amont", configurés pour relier chacun l'extrémité amont du boîtier à une face externe du carter externe tout en autorisant le déplacement de cette extrémité amont par rapport à la face externe du carter externe, en ce que chaque dispositif de maintien amont comprend une rondelle bombée et une rondelle creusée, la rondelle bombée comprenant une face bombée reçue dans une face concave de la rondelle creusée, ladite rondelle bombée pouvant se déplacer par rapport à ladite rondelle creusée pour réaliser ladite liaison à rotule et en ce qu'au moins l'un des dispositifs de maintien amont comprend une bride latérale fixée au boîtier et un ensemble de liaison configuré pour être fixé au carter externe, l'ensemble de liaison comprenant un bossage, une vis de liaison fixée audit bossage, une douille cylindrique creuse et un organe de rappel élastique, la douille présentant une partie de section large de réception de la tête de la vis, cette partie de section large présentant à son extrémité externe un premier épaulement, tel une collerette, formant butée pour ledit organe de rappel élastique dans le sens radial et cette partie de section large se prolongeant à son extrémité interne par une partie de section étroite de réception du corps de la vis, en ce que la partie de section étroite de la douille est logée à la fois dans une ouverture de la bride du boîtier et dans un orifice central ménagé dans la rondelle bombée.

Grâce à ces caractéristiques de l'invention, le boîtier et le carter peuvent suivre les déplacements relatifs de l'un par rapport à l'autre en raison des dilatations différentielles en fonctionnement, tout en conservant un entrefer qui varie peu entre les tubes de refroidissement et le carter et tout en évitant le contact entre le carter et le boîtier.

Selon d'autres caractéristiques avantageuses et non limitatives de l'invention, prises seules ou en combinaison :
- ladite rondelle creusée est percée d'un orifice central et présente une face radialement interne plane et une face radialement externe opposée dont la partie centrale est plane et dont la partie périphérique est concave, et en ce que cette rondelle creusée est disposée de façon que sa face interne plane repose contre une face plane du bossage et que l'extrémité libre de la partie de section étroite de la douille repose contre la partie centrale plane de la face radialement externe de la rondelle creusée;
- la bride latérale et la rondelle bombée sont monoblocs et en ce que le bossage et la rondelle creusée sont monoblocs;
- le dispositif de maintien amont comprend une rondelle cylindrique percée d'un orifice, disposée autour de l'ensemble de liaison, contre la bride fixée au boîtier via un organe de rappel élastique prenant appui sur le premier épaulement ;
- ladite douille présente sur sa surface extérieure, un troisième épaulement entre sa partie de section étroite et sa partie de section large et ce troisième épaulement forme une butée de limitation de la course de la bride latérale du boîtier par rapport audit carter ;
- l'ouverture ménagée dans la bride du boîtier est de forme oblongue, sa dimension la plus importante étant orientée circonférentiellement autour de l'axe longitudinal du carter ;
- ledit dispositif d'accrochage comprend un dispositif de maintien par liaison à rotule, dit "aval", qui est configuré pour relier l'extrémité aval du boîtier au carter externe, tout en autorisant le déplacement de cette extrémité aval du boîtier par rapport au carter ;
- ledit dispositif de maintien aval comprend une rondelle bombée et une rondelle creusée, la rondelle bombée comprenant une face bombée reçue dans une face concave de la rondelle creusée, ladite rondelle bombée pouvant se déplacer par rapport à ladite rondelle creusée pour réaliser la liaison à rotule ;
- le dispositif de maintien aval comprend une bride aval fixée au boîtier et un ensemble de liaison, configuré pour être fixé au carter externe et s'étendant à travers une ouverture ménagée dans ladite bride aval, en ce que l'ensemble de liaison du dispositif de maintien aval comprend une vis de liaison, une douille cylindrique creuse, un organe de rappel élastique et une patte de fixation, la douille présentant une partie de section large de réception de la tête de la vis, cette partie de section large présentant à son extrémité externe un premier épaulement, tel une collerette, formant butée pour ledit organe de rappel élastique de l'ensemble de liaison du dispositif de maintien aval dans le sens radial et cette partie de section large se prolongeant à son extrémité interne par une partie de section étroite de réception du corps de la vis, en ce que la partie de section étroite de la douille est logée à la fois dans l'ouverture de la bride aval du boîtier et dans l'orifice central de la rondelle bombée, et l'ensemble de liaisons comprend un élément de blocage femelle, configuré pour être vissé à l'extrémité interne de la vis, contre la patte de fixation, elle-même configurée pour être fixée sur le carter ;
- ladite douille présente sur sa surface extérieure, un troisième épaulement entre sa partie de section étroite et sa partie de section large et ce troisième épaulement forme une butée de limitation de la course de la bride aval du boîtier par rapport à la patte de fixation fixée audit carter ;
- l'ouverture ménagée dans la bride aval du second dispositif de maintien est de forme oblongue, sa dimension la plus importante étant orientée selon l'axe longitudinal du carter.

L'invention concerne également un carter externe de turbomachine présentant une face externe et comprenant des tubes de refroidissement percés de trous d'éjection d'air, ces tubes étant destinés à être disposés autour de la face externe dudit carter externe de façon que les trous d'éjection d'air soient en regard de la face externe dudit carter externe. Conformément à l'invention, ce carter externe est muni du dispositif de refroidissement par jets d'air, tel que précité.

Enfin, l'invention concerne une turbomachine. Conformément à l'invention, cette turbomachine comprend un carter externe tel que précité.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] est un schéma représentant une coupe axiale d'un exemple de turbomachine, sur laquelle le dispositif d'accrochage du boîtier d'alimentation en air conforme à l'invention peut être utilisé.
[Fig. 2] est une vue en perspective représentant de façon schématique un dispositif d'accrochage du boîtier d'alimentation en air selon l'état de la technique.
[Fig. 3] est une vue en perspective du dispositif d'accrochage d'un boîtier d'alimentation en air conforme à l'invention.
[Fig. 4] est une vue éclatée et en perspective d'une partie du boîtier d'alimentation en air et d'un premier mode de réalisation de l'un des deux dispositifs de maintien amont qui font partie du dispositif d'accrochage conforme à l'invention.
[Fig. 5] est une vue de détail et en perspective d'une partie du boîtier et d'une partie du dispositif de maintien amont de la figure 4.
[Fig. 6] est une vue en coupe transversale du dispositif de maintien amont de la figure 4.
[Fig. 7] est une vue en coupe transversale d'un second mode de réalisation du dispositif de maintien amont de la figure 4.
[Fig. 8] est une vue en coupe du dispositif de maintien aval qui fait partie du dispositif d'accrochage conforme à l'invention, ce dispositif aval étant représenté dans une première position.
[Fig. 9] est une vue en coupe du dispositif de maintien aval qui fait partie du dispositif d'accrochage conforme à l'invention, ce dispositif aval étant représenté dans une seconde position.
[Fig. 10] est une vue en coupe du dispositif de maintien aval qui fait partie du dispositif d'accrochage conforme à l'invention, ce dispositif aval étant représenté dans une troisième position.
[Fig. 11] est une vue de détail et en perspective d'une partie du dispositif de maintien aval des figures 8 à 10.

### DESCRIPTION DETAILLEE DE L'INVENTION

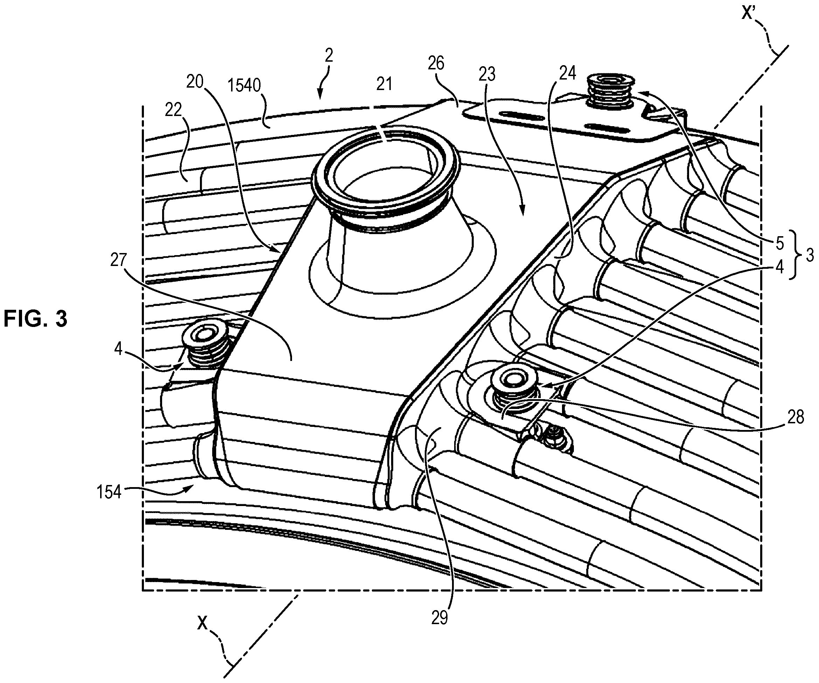

En se reportant à la figure 3, on peut voir que le dispositif d'accrochage 3 conforme à l'invention permet d'accrocher un boîtier 20 d'alimentation en air sur un carter externe 154, en autorisant un certain degré de liberté de ce boîtier par rapport au carter.

Dans l'exemple représenté sur les figures, ce carter externe est celui d'une turbine basse pression. Conformément à l'invention, ce carter pourrait être celui d'une turbine haute pression ou d'un compresseur haute ou basse pression.

Un tel carter 154 présente une forme annulaire, de préférence tronconique ou sensiblement tronconique. Il s'étend autour d'un axe principal X-X' coaxial à l'axe 10 lorsque le carter est monté dans la turbomachine. Ce carter 154 présente en outre à son extrémité aval, une bride radiale annulaire aval 1540.

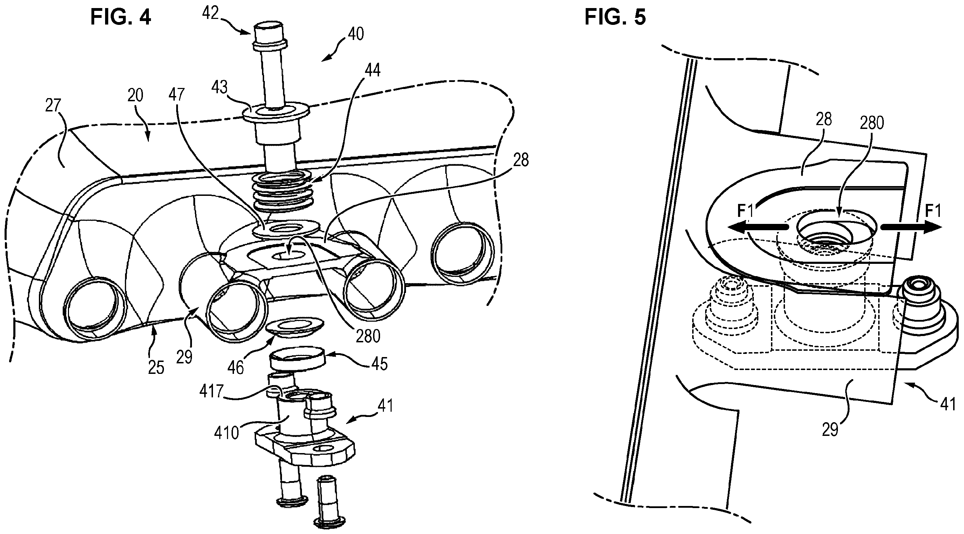

Sur la figure 3, on peut également voir que le boîtier 20 présente une face externe 23 sur laquelle se raccorde le raccord 21, deux faces latérales opposées 24 (une seule étant visible sur la figure) et sur lesquelles les tubes 22 de refroidissement se raccordent, de façon à être en communication d'air avec ce boîtier et une face interne 25 qui est mieux visible sur la figure 4 et qui se trouve en regard de la face externe du carter 154.

Enfin, ce boîtier 20 présente une extrémité aval 26 et une extrémité amont 27.

Dans la description et les revendications, les termes « amont » et « aval » sont définis par référence au sens d'écoulement du flux, notamment du flux primaire, dans la turbomachine.

La forme de la face interne 25 de ce boîtier 20 épouse sensiblement le contour de la face externe du carter 154.

Le dispositif d'accrochage 3 conforme à l'invention comprend au moins deux (et de préférence trois) dispositifs de maintien par liaison à rotule qui relient chacun ledit boîtier 20 audit carter externe 154.

De préférence encore, le dispositif d'accrochage 3 conforme à l'invention comprend deux dispositifs 4 de maintien par liaison à rotule, dit « dispositifs amont », car disposés à l'extrémité amont du boîtier 20, de préférence respectivement de part et d'autre de l'extrémité amont 27 du boîtier.

De préférence également, le dispositif d'accrochage 3 comprend en outre un dispositif 5 de maintien par liaison à rotule, dit « dispositif aval », car il relie l'extrémité aval 26 du boîtier 20 au carter 154, plus précisément à la bride aval 1540 du carter 154.

Le dispositif de maintien amont 4 par liaison à rotule va maintenant être décrit plus en détail en liaison avec les figures 3 à 7.

Ce dispositif de maintien amont 4 comprend une bride latérale 28, fixée au boîtier 20 et un ensemble de liaison 40, fixé à la face externe du carter externe 154. La bride latérale 28 s'étend dans une direction circonférentielle par rapport au carter.

Comme on peut le voir sur les figures, la bride latérale 28 a de préférence la forme d'une plaque, fixée au boîtier 20 à proximité de l'extrémité amont 27 de ce dernier, par exemple par soudage entre deux tubes de refroidissement voisins 22 ou entre deux douilles 29 débouchant du boîtier 20 et qui permettent le raccordement des tubes de refroidissement 22 à ce boîtier.

De préférence encore, le dispositif de maintien amont 4 est disposé au niveau de la zone du carter 154 qui se déforme le plus.

Cette bride latérale 28 est percée d'une ouverture 280, cette ouverture ayant une section autorisant le déplacement de la bride latérale 28 par rapport à l'ensemble de liaison 40 qui va être décrit ultérieurement.

De préférence encore, l'ouverture 280 est de forme oblongue, sa plus grande dimension étant orientée circonférentiellement par rapport l'axe longitudinal X-X' du carter 154 (voir figure 5).

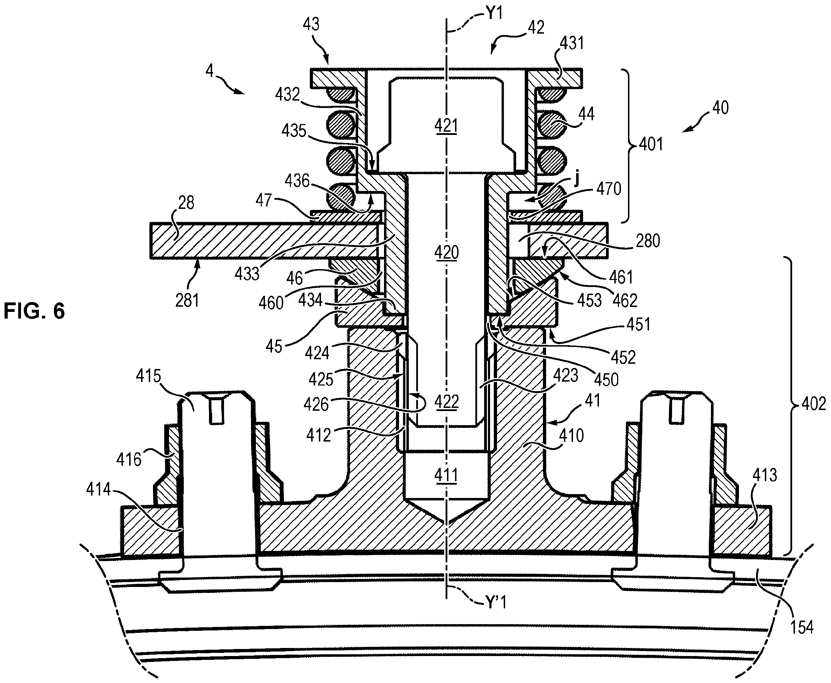

Un mode de réalisation possible de l'ensemble de liaison 40 va maintenant être décrit en se reportant aux figures 4 et 6.Cet ensemble de liaison 40 s'étend de part et d'autre de la bride latérale 28 en définissant par rapport à celle-ci, une partie externe 401, c'est-à-dire située à l'extérieur de la bride 28 (vers le haut de la figure 6) et une partie interne 402, cette dernière s'étendant entre la bride latérale 28 et la surface externe du carter 154.

L'ensemble de liaison 40 comprend d'une manière générale un bossage 41, un axe de liaison 42, une douille 43, un organe de rappel élastique 44, une rondelle creusée (ou concave) 45, une rondelle convexe (ou bombée) 46 et préférentiellement, pour limiter l'usure, une rondelle cylindrique 47.

Ces divers éléments vont maintenant être décrits plus en détail.

L'axe de liaison 42 s'étend selon une direction Y1-Y'1, dite « radiale ».

Le bossage 41 comprend une pièce cylindrique 410, percée d'un alésage 411, de préférence borgne et qui débouche sur la surface radialement externe de la pièce 410.

Cet alésage 411 est taraudé sur sa surface intérieure (taraudage 412) et s'étend selon l'axe longitudinal Y1 -Y'1.

Le bossage 41 peut être monobloc avec le carter 154, ou bien être soudé sur celui-ci ou bien encore, comme représenté sur les figures, être vissé sur ce carter.

Dans ce dernier cas et à cet effet, la pièce cylindrique 410 se prolonge par exemple par au moins deux pattes de fixation 413, disposées de part et d'autre de la pièce cylindrique. Chaque patte de fixation 413 est percée d'un orifice 414. Un boulon 415 est inséré au travers des orifices 414 et de la paroi du carter 154 et est retenu en place par un écrou 416, assurant ainsi la fixation du bossage 41 sur le carter 154.

L'axe de liaison 42 est par exemple une vis comprenant un corps 420, muni à l'une de ses extrémités d'une tête 421 et qui présente à son extrémité opposée 422, un filetage 423.

La vis 42 coopère avec un élément de blocage femelle 424, présentant un filetage 425 sur sa surface extérieure et un taraudage 426 sur sa surface intérieure.

La douille 43 présente une forme générale cylindrique d'axe longitudinal Y1-Y'1.

La douille 43 est bordée à l'une de ses extrémités par une collerette 431, qui définit un premier épaulement dont le rôle sera expliqué ultérieurement. Cette douille 43 se prolonge vers l'intérieur depuis la collerette 431, par une première partie 432 de cette section large, autorisant le passage de la vis 42, y compris sa tête 421 et même éventuellement le passage d'un outil de mise en place de vissage de cette tête 421.

Cette première partie 432 se prolonge par une seconde partie 433 de section étroite, autorisant le passage du corps 420 de l'axe de liaison, ici de la vis, mais interdisant le passage de la tête 421. L'extrémité libre de la deuxième partie étroite 433 porte la référence 434.

Le passage entre la première partie de section large 432 et la deuxième partie de section étroite 433 définit un deuxième épaulement 435 du côté intérieur du passage central de la douille et un troisième épaulement 436 du côté extérieur. L'épaulement 435 retient la tête de vis 421.

Selon une variante de réalisation non représentée sur les figures, la douille 43 et l'axe de liaison 42 pourraient ne former qu'une seule pièce.

L'organe de rappel élastique 44 est par exemple un ressort hélicoïdal de compression. Il est disposé autour de la première partie 432 de la douille 43, de sorte que l'une de ses extrémités prenne appui contre la collerette 431 et que son autre extrémité prenne appui sur la bride latérale 28. On notera qu'il est possible d'intercaler une rondelle cylindrique 47 entre la bride latérale 28 et le ressort hélicoïdal 44, afin d'empêcher l'endommagement de la bride latérale 28. Cette rondelle cylindrique 47, percée d'un orifice 470 est alors disposée autour de la partie de section étroite 433 de la douille 43.

La rondelle creusée 45 est une pièce cylindrique de faible épaisseur, percée d'un orifice central 450. Elle présente une face radialement interne 451 et une face radialement externe opposée dont la partie centrale 452 est plane et dont la partie périphérique 453 est concave et incurvée en arc de cercle depuis cette partie plane vers la périphérie de la rondelle.

Cette rondelle creusée 45 est disposée de façon que sa face interne plane 451 repose contre la face radialement externe 417, plane, de la pièce cylindrique 410 du bossage 41 et que l'extrémité libre 434 de la douille 43 repose contre la face centrale plane 452, (référence 417 visible en figure 4 uniquement).

La rondelle bombée 46 est percée d'un orifice central 460, de plus grandes dimensions que celui 450 de la rondelle creusée 45. Elle présente une face radialement externe 461 plane et une face opposée interne 462 convexe et bombée (en forme de dôme). La rondelle bombée 46 est disposée autour de la partie 433 de section étroite de la douille, de façon que sa face externe plane 461 soit au contact de la bride latérale 28 et notamment de la face radialement interne 281 de celle-ci et que sa face convexe 462 soit au contact de la face concave 453 de la rondelle creusée 45.

Le montage du dispositif de maintien amont 4 est le suivant.

L'élément de blocage femelle 424 est vissé à l'intérieur de l'alésage 411 de la pièce cylindrique 410, par coopération de son filetage extérieur 425 avec le taraudage 412 de l'alésage.

La douille 43, l'organe de rappel 44 et les différentes rondelles 45, 46 et 47 sont positionnées comme exposé précédemment, la partie étroite 433 de la douille étant insérée dans les orifices 470, 280 et 460.

La vis 42 est introduite dans la douille 43, ainsi qu'au travers des orifices 470, 280 et 460, puis vissée à l'intérieur de l'élément de blocage femelle 424 par coopération de son filetage 423 avec le taraudage 426 de l'écrou. Ce vissage est poursuivi jusqu'à ce que la tête de vis 421 vienne en butée contre l'épaulement 435 et que l'extrémité 434 de la douille 43 vienne en butée contre la rondelle creusée 45.

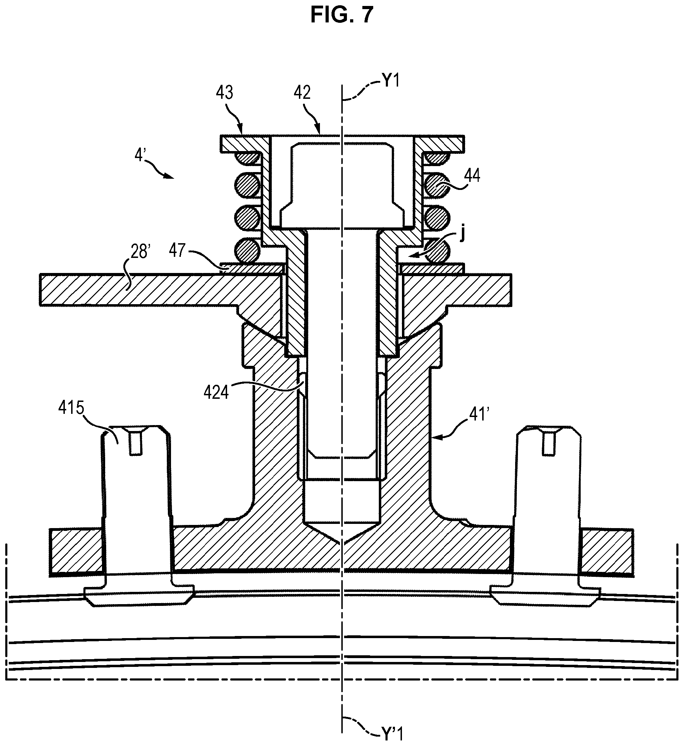

La figure 7 illustre une variante de réalisation du dispositif de maintien amont représenté sur la figure 6. Un tel dispositif porte la référence 4'. Ce dispositif diffère du précédent en ce que la bride latérale 28 et la rondelle bombée 46 sont monoblocs et forment une seule et même bride latérale référencée 28'.

Par ailleurs, le bossage diffère du précédent en ce que la pièce cylindrique 410 et la rondelle creusée 45 sont monoblocs, le bossage portant alors la référence 41'. Les autres pièces sont identiques.

Le fonctionnement du dispositif de maintien amont 4 est le suivant.

Le ressort 44 est dimensionné de façon à être sollicité en compression et donc contraint entre la collerette 431 et la bride latérale 28 ou la rondelle 47 si celle-ci est présente, lorsque la vis 42 est vissée dans l'élément de blocage femelle 424. En d'autres termes, l'organe de rappel élastique 44 est disposé et retenu entre la partie externe 401 de l'ensemble de liaison 4 et la bride 28, de façon à être sollicitée en compression.

Ce ressort 44 tend donc en permanence à vouloir revenir dans sa position d'origine et donc à écarter la bride latérale 28, de la collerette 431.

Cette position d'origine est celle représentée sur la figure 6.

Le ressort 44 est configuré de sorte que la bride latérale 28 peut se rapprocher de la collerette 431, en comprimant encore davantage les spires du ressort 44, c'est-à-dire en agissant à l'encontre de la force de rappel dudit organe de rappel élastique.

Par ailleurs, la collerette 43 est configurée, de sorte que dans la configuration d'origine représentée sur la figure 6, alors que la douille 43 contraint le ressort 44 grâce à la collerette 431, il existe un jeu j entre l'épaulement 436 et la face radialement externe de la rondelle 47 ou la face radialement externe de la bride latérale 28 si cette rondelle 47 est absente.

Lorsque la bride latérale 28, solidaire du boîtier 20, se déplace légèrement radialement vers l'extérieur (vers le haut de la figure 6) pour suivre le mouvement du boîtier 20, alors la rondelle 47 vient en butée contre l'épaulement 436.

Dans cette position, le ressort 44 est alors plus fortement comprimé. Toutefois, le jeu j est calculé pour être suffisamment faible et pour empêcher l'écrasement complet, voire la déformation du ressort 44. L'épaulement 436 sert donc de butée de fin de course pour le déplacement de la bride latérale 28. Ceci permet d'autoriser un débattement radial mais limité entre la bride latérale 28 et le carter 154.

Par ailleurs, la bride latérale 28 peut se déplacer, de sorte que l'axe central de son orifice 280 ne soit plus parallèle à l'axe Y1-Y'1.

Un tel mouvement est rendu possible par la coopération de la face convexe bombée 462 de la rondelle bombée 46 avec la face externe concave incurvée 453 de la rondelle creusée 45. Lors de ce mouvement, la rondelle bombée 46 repose toujours contre la rondelle creusée 45 mais glisse sur celle-ci de sorte que son axe est légèrement décalé par rapport à l'axe Y-Y'1 de la vis 42. La rondelle bombée 46 suit ainsi le mouvement de la bride latérale 28. Ce glissement de la rondelle bombée 46 sur la rondelle creusée 45 assure la fonction de "liaison à rotule" du dispositif de maintien amont 4.

Dans ce cas, le ressort 44 est écrasé davantage d'un côté que de l'autre.

Enfin, on notera que lorsque l'orifice 280 est oblong, il autorise également un mouvement de la bride 28 selon une direction circonférentielle autour du carter 154 (voir les flèches F1 sur la figure 5).

Le dispositif de maintien aval 5 de l'extrémité aval 26 du boîtier 20 sur la bride aval 1540 du carter va maintenant être décrit plus en détail en faisant référence aux figures 7 à 9.

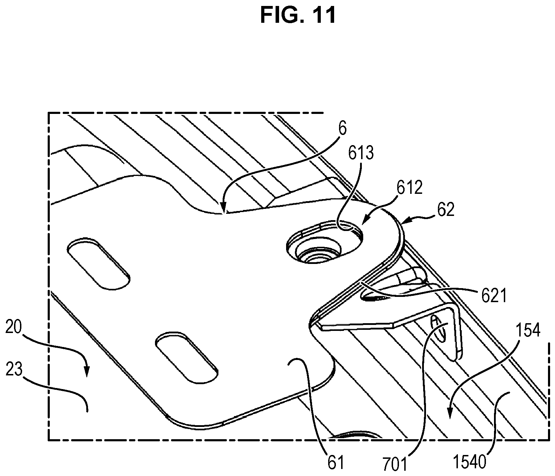

Comme on peut le voir sur la figure 11, le second dispositif de maintien 5 comprend un élément de maintien 6 (tel qu'une bride aval), fixé au boîtier 20 d'alimentation en air et un ensemble de liaison 7 relié à la bride aval 1540 du carter.

Comme on peut le voir sur la figure 11, la bride aval 6 a de préférence la forme d'une patte de fixation qui comprend par exemple une plaque 61 et une plaque 62 assemblées l'une à l'autre.

La plaque 61 est fixée sur le boîtier sur le boîtier 20, plus précisément sur la face externe 23 de celui-ci.

La plaque 61 présente également une partie aval 612 qui fait saillie hors du boîtier 20 dans la direction aval et qui est percée d'un orifice 613.

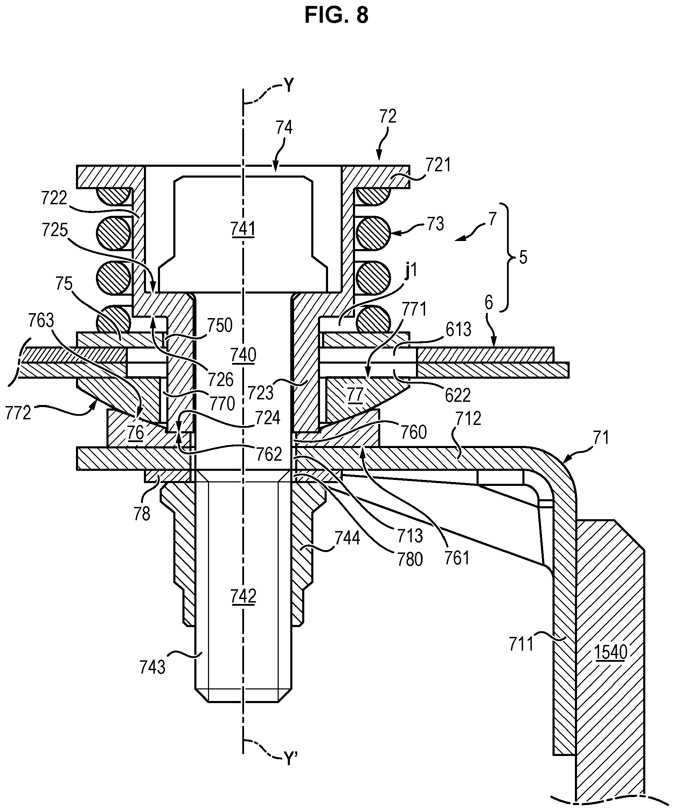

La plaque 62 comprend également une partie amont qui épouse la forme de l'extrémité aval 26 du boîtier 20 et qui est fixée sur celle-ci par vissage ou par soudage par exemple. Cette plaque 62 se prolonge par une partie aval 621 qui fait saillie vers l'aval par rapport au boîtier 20 et qui s'étend sous la partie aval 612 de la plaque 61, parallèlement à celle-ci. Elle est percée d'un orifice 622 (voir figure 8).

Les deux orifices 613 et 622 sont superposés et coaxiaux.

De façon avantageuse, ils présentent une forme oblongue, dont la dimension (longueur) la plus importante est orientée selon la direction axiale X-X du boîtier.

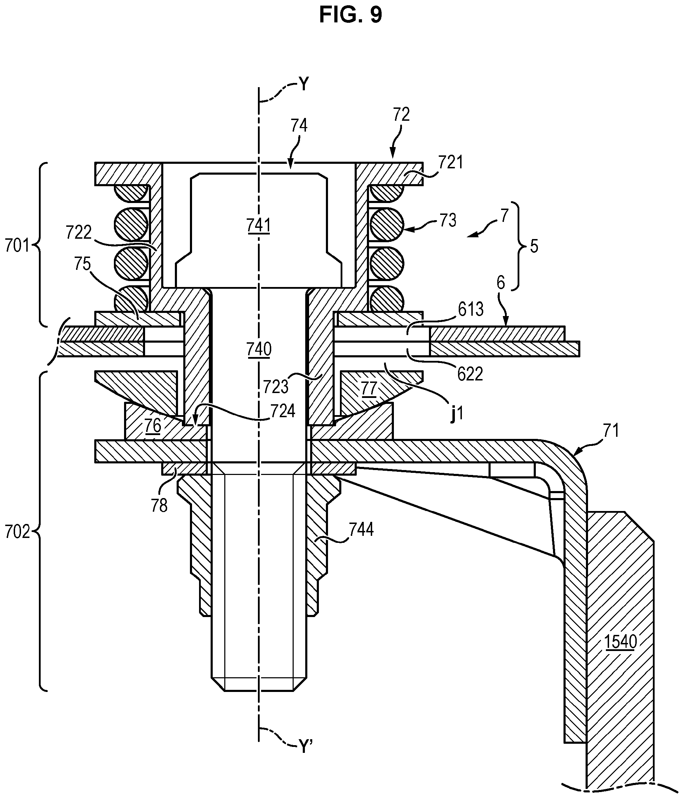

Un mode de réalisation possible de l'ensemble de liaison 7 va maintenant être décrit en se reportant à la figure 8. L'ensemble de liaison 7 s'étend de part et d'autre de la bride aval 6 en définissant par rapport à celle-ci, une partie externe 701, c'est-à-dire située à l'extérieur de l'élément 6 (vers le haut de la figure 9) et une partie interne 702, cette dernière s'étendant entre la bride aval 6 et la surface externe du carter 154, comme on peut le voir sur la figure 9.

L'ensemble de liaison 7 comprend d'une manière générale une patte de fixation 71, une douille 72, un organe de rappel élastique 73, un axe de liaison 74, ainsi qu'une rondelle creusée 76 et une rondelle bombée 77, et préférentiellement, pour limiter l'usure, deux rondelles cylindriques 75, 78.

Ces divers éléments vont maintenant être décrits plus en détail.

L'axe de liaison 74 s'étend selon une direction Y-Y', dite « radiale », du fait de son orientation par rapport à l'extrémité aval du carter 154.

La patte de fixation 71 se présente sous la forme d'une équerre en L dont l'une des deux branches 711 est destinée à être fixée sur la bride aval 1540 du carter 154. Cette fixation peut être réalisée par exemple par vissage ou par soudure. Lorsqu'elle est fixée, cette branche 711 s'étend dans un plan parallèle à l'axe (direction) Y-Y'.

La deuxième branche 712, perpendiculaire à la première 711 est percée d'un orifice 713.

L'axe de liaison 74 est par exemple une vis comprenant un corps 740, muni à l'une de ses extrémités d'une tête 741 et qui présente à son extrémité opposée 742, un filetage 743. La vis 74 coopère avec un écrou taraudé 744, qui peut être vissé sur le filetage 743. L'extrémité libre 742 de la vis 74 et l'écrou 744 font partie de la partie interne 702 de l'ensemble 7.

La douille 72 présente une forme générale cylindrique.

La douille 72 est bordée à l'une de ses extrémités par une collerette 721 qui définit un premier épaulement dont le rôle sera expliqué ultérieurement. Cette douille se prolonge vers l'intérieur depuis la collerette 721, par une première partie 722 de section large, autorisant le passage de l'axe de liaison 74, y compris sa tête 741 et même éventuellement le passage d'un outil de mise en place ou de vissage de cette tête 741. Cette première partie 722 se prolonge par une seconde partie 723 de section étroite, autorisant le passage du corps 740 de l'axe de liaison mais interdisant le passage de la tête 741. L'extrémité libre de la deuxième partie étroite 723 porte la référence 724.

Le passage entre la première partie de section large 722 et la deuxième partie de section étroite 723 définit un deuxième épaulement 725 du côté intérieur du passage central de la douille et un troisième épaulement 726 du côté extérieur. L'épaulement 725 retient la tête de vis 74.

Selon une variante de réalisation non représentée sur les figures, la douille 72 et l'axe de liaison 74 pourraient ne former qu'une seule pièce.

L'organe de rappel élastique 73 est par exemple un ressort hélicoïdal de compression. Il est disposé autour de la première partie 722 de la douille 72, de sorte que l'une de ses extrémités prenne appui contre la collerette 721 et que son autre extrémité prenne appui sur la bride aval 6. Il est possible d'intercaler une rondelle cylindrique 75 percée d'un orifice central 750, entre la bride aval 6 et le ressort hélicoïdal 73, afin d'empêche l'endommagement de l'élément 6. Une telle rondelle 75 est alors disposée autour de la deuxième partie 723 de la douille 72.

De façon similaire, une rondelle cylindrique 78 percée d'un orifice 780 peut être intercalée entre la face inférieure de la branche 712 de la patte de fixation 71 et l'écrou 744 afin d'éviter l'endommagement de l'écrou 744 sur la patte 712. Le corps 740 de l'axe 74 traverse l'orifice 750.

La rondelle creusée 76 est une pièce cylindrique de faible épaisseur percée d'un orifice central 760. Elle présente une face radialement interne plane 761 et une face radialement externe opposée dont la partie centrale 762 est plane et dont la partie périphérique 763 est concave et incurvée depuis cette partie plane vers la périphérie de la rondelle.

Cette rondelle 76 est disposée de façon que sa face interne plane 761 soit au contact de la branche 712 de la patte de fixation 71 et que l'extrémité libre 724 de la douille 72 repose contre sa face centrale plane 762.

La rondelle bombée 77 est percée d'un orifice central 770 de plus grandes dimensions que l'orifice 760. Elle présente une face externe plane 771 et une face opposée interne convexe 772 et bombée.

La rondelle bombée 77 est disposée autour de la partie de section étroite 723 de la douille 72, de façon que sa face externe plane 771 soit au contact de la bride aval 6 et que sa face interne convexe 772 soit au contact de la face externe concave 763 de la rondelle 76.

Le montage du second dispositif de maintien 5 est le suivant.

La douille 72, l'organe de rappel 73 et les différentes rondelles 75, 76, 77 et 78 sont positionnées comme exposées précédemment. La vis 74 est introduite dans la douille 72 ainsi qu'au travers des orifices 760, 713 et 780. La partie étroite 723 de la douille est insérée dans les orifices 613, 622, 750 et 770. L'écrou 744 est vissé sur l'extrémité filetée 743 de la vis et sous la branche 712 de la patte 71.

Ce vissage est effectué de sorte que l'écrou 744 vient en butée contre la rondelle 78 et que la deuxième partie 723 de la douille 72, la rondelle 76 et la branche 712 soient retenues et immobilisées entre la tête 741 de la vis 74 et l'écrou 744.

Le fonctionnement du second dispositif de maintien 5 est le suivant.

Le ressort 73 est dimensionné de façon à être sollicité en compression et donc contraint entre la collerette 721 et l'élément 6 ou la rondelle 75 si celle-ci est présente.

En d'autres termes, l'organe de rappel élastique 73 est disposé et retenu entre la partie externe 701 de l'ensemble de liaison 7 et la bride aval 6 de façon à être sollicité en compression.

Ce ressort 73 tend en permanence à vouloir revenir dans sa position d'origine et donc à écarter ladite bride aval 6, de la collerette 721, (c'est-à-dire de la partie externe de l'ensemble de liaison).

Cette position d'origine est représentée sur la figure 8.

Toutefois, l'organe de rappel élastique (ressort) 73 est configuré de sorte que la bride aval 6 peut se rapprocher de la partie externe 701 de l'ensemble de liaison 7 (notamment de la collerette 721) en comprimant encore davantage les spires du ressort, c'est-à-dire en agissant à l'encontre de la force de rappel dudit organe de rappel élastique.

Cette autre position est représentée sur la figure 9.

Par ailleurs, de façon avantageuse, les différents éléments de l'ensemble de liaison 7 et de la bride aval 6 sont configurés de sorte que dans la configuration d'origine représentée sur la figure 8, alors que la douille 72 contraint le ressort 73 grâce à la collerette 721, il existe un jeu j1 entre l'épaulement 726 et la face supérieure de la rondelle 75 ou la face supérieure de la bride aval 6 si la rondelle 75 est absente.

Dans la seconde position, représentée sur la figure 9, la bride aval 6, solidaire du boîtier 20, s'est déplacée légèrement vers l'extérieur (vers le haut de la figure) pour suivre un mouvement de ce boîtier 20. Ce faisant, la rondelle 75 vient en butée contre l'épaulement 726. Le jeu j1 s'étend alors entre la face externe 771 de la rondelle bombée 77 et la face interne de la bride aval 6. Dans cette deuxième position, le ressort 73 est plus fortement comprimé. Toutefois, le jeu j1 est calculé pour être suffisamment faible pour empêcher l'écrasement complet, voire la déformation du ressort 73. L'épaulement 726 sert donc de butée de fin de course pour le déplacement de la bride aval 6.

On comprend donc que ce dispositif conforme à l'invention permet d'autoriser un débattement (radial) entre la bride aval 6 solidaire du boîtier 20 et la bride 1540 du carter, en d'autres termes un débattement entre le boîtier 20 et le carter 154. Ce débattement s'exerce selon une première direction correspond à l'axe Y-Y'. En outre, la forme oblongue des orifices 613, 622 de la bride aval 6 autorise le débattement de cette bride selon la direction axiale X-X', autour de la partie étroite 723 de la douille 72.

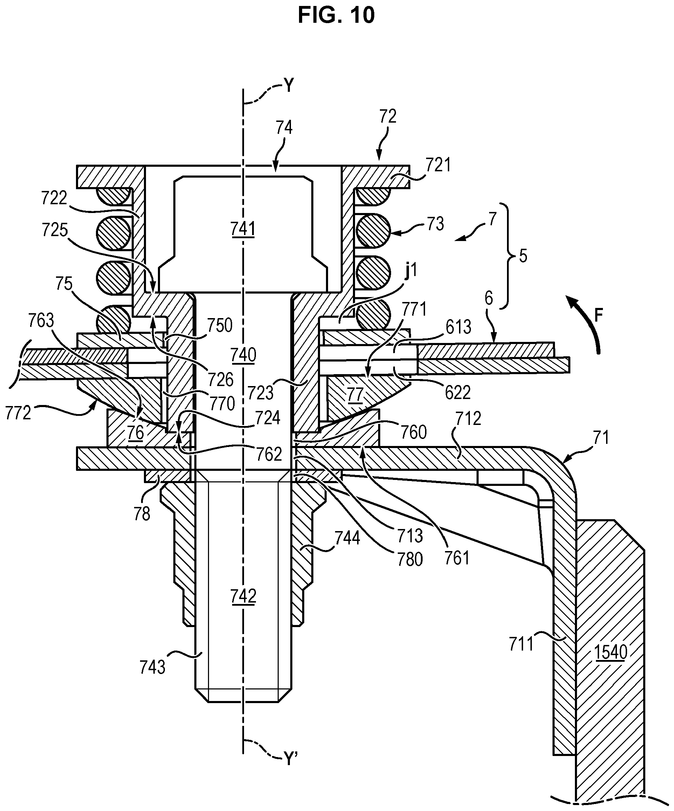

Enfin, la bride aval 6 peut se déplacer conjointement en direction axiale et en direction radiale (voir flèche F sur la figure 10).

Dans cette position, la bride aval 6 n'est plus perpendiculaire à l'axe Y-Y' de la vis 74, (ou en d'autres termes, elle n'est plus parallèle à la branche 712 de la patte de fixation 71).

Ce mouvement est rendu possible par la coopération de la face convexe 772 de la rondelle bombée 77 avec la face externe concave 763 de la rondelle creusée 76. Dans cette position, la rondelle bombée 77 repose toujours contre la rondelle creusée 76, mais glisse sur celle-ci de sorte que son axe est légèrement décalé par rapport à l'axe Y-Y' de la vis 74. La rondelle bombée 77 suit ainsi le mouvement de la bride aval 6. Ce glissement de la rondelle 77 sur la rondelle 76 assure la fonction de « liaison à rotule » du dispositif 5.

Le ressort 73 est écrasé davantage entre la collerette 721 et l'extrémité libre de la bride aval 6 (à droite sur la figure 10) qu'entre la collerette 721 et la partie de la bride aval 6 la plus proche du boîtier 20 (à gauche sur la figure 10).

La bride aval 6 est donc toujours maintenue sous pression par le ressort 73 mais peut ainsi se déplacer par rapport au carter 154 et suivre la déformation de celui-ci.

## Revendications

1. Dispositif (2) de refroidissement par jets d'air d'un carter externe (154) de turbomachine, ce dispositif (2) de refroidissement comprenant un boîtier (20) d'alimentation en air, configuré pour alimenter en air des tubes de refroidissement (22) de ce carter (154), ledit boîtier (20) comprenant une extrémité amont (27) et une extrémité aval (26), l'amont et l'aval étant définis par rapport au sens d'écoulement du flux dans ladite turbomachine, ledit boîtier (20) comprenant un dispositif d'accrochage (3) configuré pour être accroché sur ledit carter externe (154), **caractérisé en ce que** ce dispositif d'accrochage (3) comprend deux dispositifs de maintien (4, 4') par liaison à rotule, dits "amont", configurés pour relier chacun l'extrémité amont (27) du boîtier (20) à une face externe du carter externe (154) tout en autorisant le déplacement de cette extrémité amont (27) par rapport à la face externe du carter externe (154), **en ce que** chaque dispositif de maintien amont (4, 4') comprend une rondelle bombée (46) et une rondelle creusée (45), la rondelle bombée (46) comprenant une face (462) bombée reçue dans une face concave (453) de la rondelle creusée (45), ladite rondelle bombée (46) pouvant se déplacer par rapport à ladite rondelle creusée (45) pour réaliser ladite liaison à rotule et **en ce qu'**au moins l'un des dispositifs de maintien amont (4, 4') comprend une bride latérale (28) fixée au boîtier (20) et un ensemble de liaison (40) configuré pour être fixé au carter externe (154), l'ensemble de liaison (40) comprenant un bossage (41, 41'), une vis de liaison (42) fixée audit bossage (41, 41'), une douille (43) cylindrique creuse et un organe de rappel élastique (44), la douille (43) présentant une partie de section large (432) de réception de la tête (421) de la vis (42), cette partie de section large (432) présentant à son extrémité externe un premier épaulement (431), tel une collerette, formant butée pour ledit organe de rappel élastique (44) dans le sens radial et cette partie de section large (432) se prolongeant à son extrémité interne par une partie de section étroite (433) de réception du corps (420) de la vis, **en ce que** la partie de section étroite (433) de la douille est logée à la fois dans une ouverture (280) de la bride du boîtier (20) et dans un orifice central (460) ménagé dans la rondelle bombée (46).

2. Dispositif de refroidissement par jets d'air selon la revendication 1, **caractérisé en ce que** ladite rondelle creusée (45) est percée d'un orifice central (450) et présente une face radialement interne plane (451) et une face radialement externe opposée dont la partie centrale (452) est plane et dont la partie périphérique (453) est concave, et **en ce que** cette rondelle creusée (45) est disposée de façon que sa face interne plane (451) repose contre une face plane (417) du bossage (41) et que l'extrémité libre (434) de la partie de section étroite (433) de la douille (43) repose contre la partie centrale plane (452) de la face radialement externe de la rondelle creusée (45).

3. Dispositif de refroidissement par jets d'air selon la revendication 1 ou 2, **caractérisé en ce que** la bride latérale (28) et la rondelle bombée (46) sont monoblocs et **en ce que** le bossage (41') et la rondelle creusée (45) sont monoblocs.

4. Dispositif de refroidissement par jets d'air selon l'une quelconque des revendications précédentes, **caractérisé en ce que** le dispositif de maintien amont (4, 4') comprend une rondelle cylindrique (47) percée d'un orifice (470) et disposée autour de l'ensemble de liaison (40), contre la bride (28) fixée au boîtier (20), via ledit organe de rappel élastique (44) prenant appui sur le premier épaulement (431).

5. Dispositif de refroidissement par jets d'air selon l'une quelconque des revendications précédentes, **caractérisé en ce que** ladite douille (43) présente sur sa surface extérieure, un troisième épaulement (436) entre sa partie de section étroite (433) et sa partie de section large (432) et **en ce que** ce troisième épaulement (436) forme une butée de limitation de la course de la bride latérale (28) du boîtier (20) par rapport audit carter (154).

6. Dispositif de refroidissement par jets d'air selon l'une quelconque des revendications précédentes, **caractérisé en ce que** l'ouverture (280) ménagée dans la bride (28) du boîtier (20) est de forme oblongue, sa dimension la plus importante étant orientée circonférentiellement autour de l'axe longitudinal du carter (154).

7. Dispositif de refroidissement par jets d'air selon l'une quelconque des revendications précédentes, **caractérisé en ce que** ledit dispositif d'accrochage (3) comprend un dispositif de maintien (5) par liaison à rotule, dit "aval", qui est configuré pour relier l'extrémité aval (26) du boîtier (20) au carter externe (154) tout en autorisant le déplacement de cette extrémité (26) aval du boîtier par rapport au carter.

8. Dispositif de refroidissement par jets d'air selon la revendication 7, **caractérisé en ce que** ledit dispositif de maintien aval (5) comprend une rondelle bombée (77) et une rondelle creusée (76), la rondelle bombée (77) comprenant une face (772) bombée reçue dans une face concave (763) de la rondelle creusée (76), ladite rondelle bombée (77) pouvant se déplacer par rapport à ladite rondelle creusée (76) pour réaliser la liaison à rotule.

9. Dispositif de refroidissement par jets d'air selon la revendication 8, **caractérisé en ce que** le dispositif de maintien aval (5) comprend une bride aval (6) fixée au boîtier (20) et un ensemble de liaison (7), configuré pour être fixé au carter externe (154) et s'étendant à travers une ouverture (613, 622) ménagée dans ladite bride aval (6), **en ce que** l'ensemble de liaison (7) du dispositif de maintien aval (5) comprend une vis de liaison (74), une douille (72) cylindrique creuse, un organe de rappel élastique (73) et une patte de fixation (71), la douille (72) présentant une partie de section large (722) de réception de la tête (741) de la vis (74), cette partie de section large (722) présentant à son extrémité externe un premier épaulement (721), tel une collerette, formant butée pour ledit organe de rappel élastique (73) de l'ensemble de liaison (7) du dispositif de maintien aval (5) dans le sens radial et cette partie de section large (722) se prolongeant à son extrémité interne par une partie de section étroite (723) de réception du corps (740) de la vis (74), **en ce que** la partie de section étroite (723) de la douille est logée à la fois dans l'ouverture (613, 622) de la bride aval (6) du boîtier (20) et dans l'orifice central (770) de la rondelle bombée (77), et **en ce que** l'ensemble de liaison (7) comprend un élément de blocage femelle (744) configuré pour être vissé à l'extrémité interne de la vis (74), contre la patte de fixation (71) elle-même configurée pour être fixée sur le carter (154).

10. Dispositif de refroidissement par jets d'air selon la revendication 9, **caractérisé en ce que** ladite douille (72) présente sur sa surface extérieure, un troisième épaulement (726) entre sa partie de section étroite (723) et sa partie de section large (722) et **en ce que** ce troisième épaulement (726) forme une butée de limitation de la course de la bride aval (6) du boîtier (20) par rapport à la patte de fixation (71) fixée audit carter (154).

11. Dispositif de refroidissement par jets d'air selon la revendication 9 ou 10, **caractérisé en ce que** l'ouverture (613, 622) ménagée dans la bride aval (6) du second dispositif de maintien (5) est de forme oblongue, sa dimension la plus importante étant orientée selon l'axe longitudinal du carter (154).

12. Carter externe (154) de turbomachine présentant une face externe et comprenant des tubes de refroidissement (22) percés de trous d'éjection d'air, ces tubes étant destinés à être disposés autour de la face externe dudit carter externe (154) de façon que les trous d'éjection d'air soient en regard de la face externe dudit carter externe (154), **caractérisé en ce qu'**il est muni d'un dispositif de refroidissement par jets d'air selon l'une quelconque des revendications 1 à 11.

13. Turbomachine, **caractérisé en ce qu'**elle comprend un carter externe (154) selon la revendication 12.

## Patentansprüche

1. Prallkühlvorrichtung (2) für ein Außengehäuse (154) einer Turbomaschine, wobei diese Kühlvorrichtung (2) einen Luftversorgungskasten (20) umfasst, der ausgelegt ist, um Kühlrohre (22) dieses Gehäuses (154) mit Luft zu versorgen, wobei der Kasten (20) ein stromaufwärtiges Ende (27) und ein stromabwärtiges Ende (26) umfasst, wobei stromaufwärtig und stromabwärtig im Verhältnis zur Fließrichtung des Stroms in der Turbomaschine definiert sind, wobei der Kasten (20) eine Verankerungsvorrichtung (3) umfasst, die ausgelegt ist, um auf dem Außengehäuse (154) verankert zu sein, **dadurch gekennzeichnet, dass** diese Verankerungsvorrichtung (3) zwei sogenannte "stromaufwärtige" Haltevorrichtungen (4, 4') durch Kugelgelenkverbindung umfasst, die ausgelegt sind, um jedes stromaufwärtige Ende (27) des Kastens (20) mit einer Außenfläche des Außengehäuses (154) zu verbinden und dabei die Verlagerung dieses stromaufwärtigen Endes (27) im Verhältnis zur Außenfläche des Außengehäuses (154) gestattet ist, dass jede stromaufwärtige Haltevorrichtung (4, 4') eine bauchige Scheibe (46) und eine ausgehöhlte Scheibe (45) umfasst, wobei die bauchige Scheibe (46) eine bauchige Fläche (462) umfasst, die in einer konkaven Fläche (453) der ausgehöhlten Scheibe (45) aufgenommen ist, wobei sich die bauchige Scheibe (46) im Verhältnis zur ausgehöhlten Scheibe (45) verlagern kann, um die Kugelgelenkverbindung zu bilden und dass mindestens eine der stromaufwärtigen Haltevorrichtungen (4, 4') einen seitlichen Flansch (28) umfasst, der am Kasten (20) befestigt ist und eine Verbindungsanordnung (40), die ausgelegt ist, um am Außengehäuse (154) befestigt zu sein, wobei die Verbindungsanordnung (40) eine Erhebung (41, 41'), eine an der Erhebung (41, 41') befestigte Verbindungsschraube (42), eine hohle zylindrische Hülse (43) und ein elastisches Rückstellorgan (44) umfasst, wobei die Hülse (43) einen Teil mit breitem Querschnitt (432) zur Aufnahme des Kopfes (421) der Schraube (42) aufweist, wobei dieser Teil mit breitem Querschnitt (432) an seinem äußeren Ende einen ersten Absatz (431) wie ein Kragen aufweist, der für das elastische Rückstellorgan (44) in radialer Richtung einen Anschlag bildet und sich dieser Teil mit breitem Querschnitt (432) an seinem inneren Ende durch einen Teil mit schmalem Querschnitt (433) zur Aufnahme des Körpers (420) der Schraube verlängert, dass der Teil mit schmalem Querschnitt (433) der Hülse sowohl in einer Öffnung (280) des Flanschs des Kastens (20) als auch in einem zentralen Loch (460) untergebracht ist, das in der bauchigen Scheibe (46) eingerichtet ist.

2. Prallkühlvorrichtung nach Anspruch 1, **dadurch gekennzeichnet, dass** die ausgehöhlte Scheibe (45) von einem zentralen Loch (450) durchbrochen ist und eine radial innere ebene Fläche (451) und eine gegenüberliegende radial äußere Fläche aufweist, deren zentraler Teil (452) eben ist und deren Umfangsteil (453) konkav ist, und dass diese ausgehöhlte Scheibe (45) derart angeordnet ist, dass ihre innere ebene Fläche (451) an einer ebenen Fläche (417) der Erhebung (41) ruht und dass das freie Ende (434) des Teils mit schmalem Querschnitt (433) der Hülse (43) an dem zentralen ebenen Teil (452) der radial äußeren Fläche der ausgehöhlten Scheibe (45) ruht.

3. Prallkühlvorrichtung nach Anspruch 1 oder 2, **dadurch gekennzeichnet, dass** der seitliche Flansch (28) und die bauchige Scheibe (46) einteilig sind und dass die Erhebung (41') und die ausgehöhlte Scheibe (45) einteilig sind.

4. Prallkühlvorrichtung nach einem der vorangehenden Ansprüche, **dadurch gekennzeichnet, dass** die stromaufwärtige Haltevorrichtung (4, 4') eine zylindrische Scheibe (47) umfasst, die von einem Loch (470) durchbohrt ist und um die Verbindungsanordnung (40) am Flansch (28) angeordnet ist, der am Kasten (20) über das elastische Rückstellorgan (44) befestigt ist, das sich auf dem ersten Absatz (431) abstützt.

5. Prallkühlvorrichtung nach einem der vorangehenden Ansprüche, **dadurch gekennzeichnet, dass** die Hülse (43) auf ihrer äußeren Oberfläche einen dritten Absatz (436) zwischen ihrem Teil mit schmalem Querschnitt (433) und ihrem Teil mit breitem Querschnitt (432) aufweist und dass dieser dritte Absatz (436) einen Anschlag bildet, der den Weg des seitlichen Flanschs (28) des Kastens (20) im Verhältnis zum Gehäuse (154) begrenzt.

6. Prallkühlvorrichtung nach einem der vorangehenden Ansprüche, **dadurch gekennzeichnet, dass** die im Flansch (28) des Kastens (20) eingerichtete Öffnung (280) länglich ist, wobei ihre größte Dimension umfangmäßig um die Längsachse des Gehäuses (154) ausgerichtet ist.

7. Prallkühlvorrichtung nach einem der vorangehenden Ansprüche, **dadurch gekennzeichnet, dass** die Verankerungsvorrichtung (3) eine sogenannte "stromabwärtige" Haltevorrichtung (5) durch Kugelgelenkverbindung umfasst, die ausgelegt ist, um das stromabwärtige Ende (26) des Kastens (20) mit dem Außengehäuse (154) zu verbinden und dabei die Verlagerung dieses stromabwärtigen Endes (26) des Kastens im Verhältnis zum Gehäuse gestattet.

8. Prallkühlvorrichtung nach Anspruch 7, **dadurch gekennzeichnet, dass** die stromabwärtige Haltevorrichtung (5) eine bauchige Scheibe (77) und eine ausgehöhlte Scheibe (76) umfasst, wobei die bauchige Scheibe (77) eine bauchige Fläche (772) umfasst, die in einer konkaven Fläche (763) der ausgehöhlten Scheibe (76) aufgenommen ist, wobei sich die bauchige Scheibe (77) im Verhältnis zur ausgehöhlten Scheibe (76) verlagern kann, um die Kugelgelenkverbindung zu bilden.

9. Prallkühlvorrichtung nach Anspruch 8, **dadurch gekennzeichnet, dass** die stromabwärtige Haltevorrichtung (5) einen stromabwärtigen Flansch (6) umfasst, der am Kasten (20) befestigt ist und eine Verbindungsanordnung (7), die ausgelegt ist, um am Außengehäuse (154) befestigt zu sein und sich durch eine Öffnung (613, 622) erstreckt, die in dem stromabwärtigen Flansch (6) eingerichtet ist, dass die Verbindungsanordnung (7) der stromabwärtigen Haltevorrichtung (5) eine Verbindungsschraube (74), eine hohle zylindrische Hülse (72), ein elastisches Rückstellorgan (73) und einen Befestigungsfuß (71) umfasst, wobei die Hülse (72) einen Teil mit breitem Querschnitt (722) zur Aufnahme des Kopfes (741) der Schraube (74) aufweist, wobei dieser Teil mit breitem Querschnitt (722) an seinem äußeren Ende einen ersten Absatz (721) wie ein Kragen aufweist, der für das elastische Rückstellorgan (73) der Verbindungsanordnung (7) der stromabwärtigen Haltevorrichtung (5) in radialer Richtung einen Anschlag bildet und sich dieser Teil mit breitem Querschnitt (722) an seinem inneren Ende durch einen Teil mit schmalem Querschnitt (723) zur Aufnahme des Körpers (740) der Schraube (74) verlängert, dass der Teil mit schmalem Querschnitt (723) der Hülse sowohl in der Öffnung (613, 622) des stromabwärtigen Flanschs (6) des Kastens (20) als auch im zentralen Loch (770) der bauchigen Scheibe (77) untergebracht ist und dass die Verbindungsanordnung (7) ein weibliches Arretierelement (744) umfasst, das ausgelegt ist, um am inneren Ende der Schraube (74) am Befestigungsfuß (71) verschraubt zu sein, der selbst ausgelegt ist, um am Gehäuse (154) befestigt zu sein.

10. Prallkühlvorrichtung nach Anspruch 9, **dadurch gekennzeichnet, dass** die Hülse (72) auf ihrer äußeren Oberfläche einen dritten Absatz (726) zwischen ihrem Teil mit schmalem Querschnitt (723) und ihrem Teil mit breitem Querschnitt (722) aufweist und dass dieser dritte Absatz (726) einen Anschlag zur Begrenzung des Wegs des stromabwärtigen Flanschs (6) des Kastens (20) im Verhältnis zum Befestigungsfuß (71) bildet, der am Gehäuse (154) befestigt ist.

11. Prallkühlvorrichtung nach Anspruch 9 oder 10, **dadurch gekennzeichnet, dass** die im stromabwärtigen Flansch (6) der zweiten Haltevorrichtung (5) eingerichtete Öffnung (613, 622) länglich ist, wobei ihre größte Dimension in der Längsachse des Gehäuses (154) ausgerichtet ist.

12. Außengehäuse (154) einer Turbomaschine, das eine Außenfläche aufweist und Kühlrohre (22) umfasst, die von Luftauslasslöchern durchbrochen sind, wobei diese Rohre bestimmt sind, um die Außenfläche des Außengehäuses (154) derart angeordnet zu sein, dass die Luftauslasslöcher der Außenfläche des Außengehäuses (154) zugewandt sind, **dadurch gekennzeichnet, dass** es mit einer Prallkühlvorrichtung nach einem der Ansprüche 1 bis 11 versehen ist.

13. Turbomaschine, **dadurch gekennzeichnet, dass** sie ein Außengehäuse (154) nach Anspruch 12 umfasst.

## Claims

1. A device (2) for cooling, using air jets, an outer casing (154) of a turbomachine, this cooling device (2) comprising a housing (20) for supplying air to cooling tubes (22) of this casing (154), said housing (20) comprising an upstream end (27) and a downstream end (26), upstream and downstream being defined relative to the flow direction of the flow in said turbomachine, said housing (20) comprising an attachment device (3) configured to be attached on said outer casing (154), **characterized in that** this attachment device (3) comprises two retention devices (4, 4') using ball-joint connection, called "upstream," configured to connect each the upstream end (27) of the housing (20) to an outer face of the outer casing (154) while allowing the movement of this upstream end (27) relative to the outer face of the outer casing (154), **in that** each upstream retention device (4, 4') comprises a cupped washer (46) and a recessed washer (45), the cupped washer (46) comprising a cupped face (462) received in a concave face (453) of the recessed washer (45), said cupped washer (46) being able to move relative to said recessed washer (45) to form said ball-joint connection and **in that** at least one of the upstream retention devices (4, 4') comprises a lateral flange (28) attached to the housing (20) and a connection assembly (40) configured to be attached to the outer casing (154), the connection assembly (40) comprising a boss (41, 41'), a connecting screw (42) attached to said boss (41, 41'), a hollow cylindrical socket (43) and an elastic return member (44), the socket (43) having a part with a large cross section (432) for receiving the head (421) of the screw (42), this part with a large cross section (432) having, at its outer end, a first shoulder (431), like a collar, forming a stop for said elastic return member (44) in the radial direction and this part with a large cross section (432) being extended at its inner end by a part with a narrow cross section (433) for receiving the body (420) of the screw, **in that** the part with the narrow cross section (433) of the socket is housed both in an opening (280) of the flange of the housing (20) and in a central orifice (460) provided in the cupped washer (46).

2. The cooling device using air jets according to claim 1, **characterized in that** said recessed washer (45) is drilled with a central orifice (450) and has a flat radially inner face (451) and an opposite radially outer face of which the central part (452) is flat and of which the peripheral part (453) is concave, and **in that** this recessed washer (45) is arranged so that its flat inner face (451) rests against a flat face (417) of the boss (41) and that the free end (434) of the part with the narrow cross section (433) of the socket (43) rests against the flat central part (452) of the radially outer face of the recessed washer (45).

3. The cooling device using air jets according to claim 1 or 2, **characterized in that** the lateral flanges (28) and the cupped washer (46) are in a single piece and **in that** the boss (41') and the recessed washer (45) are in a single piece.

4. The cooling device using air jets according to any one of the preceding claims, **characterized in that** the upstream retention device (4, 4') comprises a cylindrical washer (47) drilled with an orifice (470) and arranged around the connection assembly (40), against the flange (28) attached to the housing (20), via said elastic return member (44) supported on the first shoulder (431).

5. The cooling device using air jets according to any one of the preceding claims, **characterized in that** said socket (43) has, on its external surface, a third shoulder (436) between its part with a narrow cross section (433) and its part with a large cross section (432) and **in that** this third shoulder (436) forms a stop for limiting the travel of the lateral flange (28) of the housing (20) relative to said casing (154).

6. The cooling device using air jets according to any one of the preceding claims, **characterized in that** the opening (280) provided in the flange (28) of the housing (20) has an oblong shape, its largest dimension being oriented circumferentially around the longitudinal axis of the casing (154).

7. The cooling device using air jets according to any one of the preceding claims, **characterized in that** said attachment device (3) comprises a retention device (5) using a ball-joint connection, called "downstream," which is configured to connect the downstream end (26) of the housing (20) to the outer casing (154) while allowing the movement of this downstream end (26) of the housing relative to the casing.

8. The cooling device using air jets according to claim 7, **characterized in that** said retention device (5) comprises a cupped washer (77) and a recessed washer (76), the cupped washer (77) comprising a cupped face (772) received in a concave face (763) of the recessed washer (76), said cupped washer (77) being able to move relative to said recessed washer (76) to form the ball-joint connection.

9. The cooling device using air jets according to claim 8, **characterized in that** the downstream retention device (5) comprises a downstream flange (6) attached to the housing (20) and a connection assembly (7) configured to be attached to the outer casing (154) and extending through an opening (613, 622) provided in said downstream flange (6), **in that** the connection assembly (7) of the downstream retention device (5) comprises a connecting screw (74), a hollow cylindrical socket (72), an elastic return member (73) and an attachment tab (71), the socket (72) having a part with a large cross section (722) for receiving the head (741) of the screw (74), this part with a large cross section (722) having at its outer end a first shoulder (721), like a collar, forming a stop for said elastic return member (73) of the connection assembly (7) of the downstream retention device (5) in the radial direction and this part with a large cross section (722) being extended at its inner end by a part with a narrow cross section (723) for receiving the body (740) of the screw (74), **in that** the part with the narrow cross section (723) of the socket is housed both in the opening (613, 622) of the downstream flange (6) of the housing (20) and in the central orifice (770) of the cupped washer (77), and **in that** the connection assembly (7) comprises a female blocking element (744) configured to be screwed into the inner end of the screw (74), against the attachment tab (71) itself configured to be attached to the casing (154).

10. The cooling device using air jets according to claim 9, **characterized in that** said socket (72) has on its external surface, a third shoulder (726) between its part with a narrow cross section (723) and its part with a large cross section (722) and **in that** this third shoulder (726) forms a stop for limiting the travel of the downstream flange (6) of the housing (20) relative to the attachment tab (71) attached to said casing (154).

11. The cooling device using air jets according to claim 9 or 10, **characterized in that** the opening (613, 622) provided in the downstream flange (6) of the second retention device (5) has an oblong shape, its largest dimension being oriented along the longitudinal axis of the casing (154).

12. Outer casing (154) of turbomachine having an outer face and comprising cooling tubes (22) drilled with air ejection holes, these tubes being intended to be arranged around the outer face of said outer casing (154) so that the air ejection holes face the outer face of said outer casing (154), **characterized in that** it is provided with a cooling device using air jets according to any one of claims 1 to 11.

13. Turbomachine, **characterized in that** it comprises an outer casing (154) according to claim 12.
